(19) **Europäisches Patentamt / European Patent Office / Office européen des brevets**

(11) **EP 1 988 381 A1**

(12) **EUROPEAN PATENT APPLICATION**

(43) Date of publication:
**05.11.2008 Bulletin 2008/45**

(51) Int Cl.:
**G01N 21/31** (2006.01)  **G01N 33/487** (2006.01)
**G01N 35/00** (2006.01)

(21) Application number: **07124081.6**

(22) Date of filing: **27.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **04.05.2007 KR 20070043809**

(71) Applicant: **Samsung Electronics Co., Ltd.
Suwon-si
Gyeonggi-do (KR)**

(72) Inventors:
 • **Lee, Jeong-gun,
  c/o Samsung Advanced Institute of Technology
  Yongin-si, Gyeonggi-do (KR)**

 • **Lee, Jung-nam,
  c/o Samsung Advanced Institute of Technology
  Yongin-si, Gyeonggi-do (KR)**
 • **Cho, Yoon-kyoung,
  c/o Samsung Advanced Institute of Technology
  Yongin-si, Gyeonggi-do (KR)**
 • **Yoo, Jung-suk,
  c/o Samsung Advanced Institute of Technology
  Yongin-si, Gyeonggi-do (KR)**

(74) Representative: **Grünecker, Kinkeldey,
Stockmair & Schwanhäusser
Anwaltssozietät
Leopoldstraße 4
80802 München (DE)**

(54) **Optical detection apparatus and method using phase sensitive detection method for disk-type microfluidic device**

(57) An optical detection apparatus and method using a phase sensitive detection method for a disk-type microfluidic device (100) are provided. The optical detection apparatus includes: a rotation driving unit (140) stopping rotation of the microfluidic device (100) when a detection area (50) of the disk-type microfluidic device (100) reaches a predetermined position; at least one light source (L1,L2) turned on and off at a corresponding frequency to emit light to the detection area (50) held at the predetermined position; an optical sensor (153) disposed to face the detection area (50) and generating an electrical signal according to intensity of incident light; and a signal processing unit receiving the electrical signal generated by the optical sensor (153) and outputting only a signal having a same frequency as an on/off frequency of one of the at least one light source. The signal generated by the optical sensor (153) may be input to a lock-in amplifier (C2).

FIG. 1

**Description**

## BACKGROUND OF THE INVENTION

1. Field of the Invention

Apparatuses and methods consistent with the present invention relate to optical detection , and more particularly, to an optical detection apparatus and method which can provide accurate information on optical properties, such as fluorescence, absorption, and luminescence, of a reaction product in a disk-type microfluidic device under no darkroom conditions.

2. Description of the Related Art

In general, a microfluidic device includes microfluidic structures such as a chamber receiving a small amount of fluid, a channel through which the fluid flows, a valve controlling the fluid flow, and various other functional units receiving the fluid and performing predetermined functions. A biochip refers to a microfluidic device including a collection of microfluidic structures fabricated on a chip-shaped substrate to conduct tests including biochemical reactions in the microfluidic device. In particular, a lab-on-a-chip refers to a system that can perform all steps of a complex reaction or analysis in one chip.

A driving pressure is necessary to transfer the fluid in the microfluidic device. A capillary pressure or a pressure generated by a separate pump is used as the driving pressure. Recently, a centrifugal microfluidic device in which microfluidic structures are disposed on a compact disk (CD)-type platform has been suggested. Such a device is referred to as a lab CD or a lab-on a disk. However, since the disk-type microfluidic device is not fixed onto a frame but moves, it is different in many aspects from a lab-on-a-chip whose lower part is fixed. The disk-type microfluidic device is advantageous in that it is easy to centrifugate and pump fluid, but is disadvantageous in that it is difficult to operate individual valves or control fluid flow distribution. Also, since many dynamic operations are required to operate the disk-type microfluidic device, it is difficult to keep darkroom conditions to detect the optical properties of a reaction product in the disk-type microfluidic device.

In order to detect biological or chemical properties in a disk-type microfluidic device, U.S. Patent No. 7,061,594 discloses a method of optically detecting a target zone while a disk rotates. However, an optical detection apparatus and method which can provide highly accurate information on a reaction product in a disk-type microfluidic device without being affected by external light has not been developed yet.

## SUMMARY OF THE INVENTION

The present invention provides an optical detection apparatus and method for providing accurate information on the optical properties, such as fluorescence, absorption, and luminescence, of a reaction product in a disk-type microfluidic device under no darkroom conditions using a phase sensitive detection method.

The present invention also provides an optical detection apparatus and method applicable to various biological and chemical reaction products.

According to an aspect of the present invention, there is provided an optical detection apparatus using a phase sensitive detection method for a disk-type microfluidic device, the optical detection apparatus comprising: a rotation driving unit stopping the rotation of the microfluidic device when a detection area of the disk-type microfluidic device reaches a predetermined position; at least one light source turned on and off at a corresponding frequency to emit light to the detection area held at the predetermined position; an optical sensor disposed to face the detection area and generating an electrical signal according to the intensity of incident light; and a signal processing unit receiving the electrical signal generated by the optical sensor and outputting only a signal having the same frequency as the on/off frequency of the light source.

The optical detection apparatus may further comprise a filter replacement unit including a plurality of filters, which transmit light of different wavelengths, and selecting and locating one of the plurality of filters on an optical path between the optical sensor and the detection area. The filter replacement unit may include a filter wheel on which the plurality of filters are arranged at the same distance from a rotational axis, wherein the angular position of the filter wheel is controlled about the rotational axis.

The at least one light source may include a light source disposed so that the center of the optical path of light emitted from the light source can pass the detection area and reach the optical sensor. The light source may face a surface of the disk-type microfluidic device and the optical sensor may face the other surface of the disk microfluidic device such that the light source and the optical sensor are disposed opposite to each other with respect to the disk-type microfluidic device.

The at least one light source may include a light source disposed so that the center of the optical path of light emitted from the light source can pass the detection area and reach an area other than the optical sensor. The optical detection apparatus may further comprise a filter disposed on an optical path between the light source and the detection area and transmitting only light of a specific wavelength. The optical detection apparatus may further comprise a filter replacement unit including a plurality of filters, which transmit light of different wavelengths, and selecting and locating one of the plurality of filters on an optical path between the light source and the detection area. The filter replacement unit may include a filter wheel on which the plurality of filters are arranged at the same distance from a rotational axis, wherein the angular position of the filter wheel is controlled about the rotational axis.

The signal processing unit may include a circuit inputting a signal obtained by multiplying the electrical signal received from the optical sensor by a sinusoidal wave having the same frequency as the on/off frequency of the light source to a low-pass filter, and outputting only a direct current (DC) component. The on/off frequency of the light source may be higher than a frequency of ambient stray light. A difference between the on/off frequency of the light source and the frequency of the ambient stray light may be higher than a cut-off frequency of the low-pass filter.

According to another aspect of the present invention, there is provided an optical detection apparatus using a phase sensitive detection method for a disk-type microfluidic device, the optical detection apparatus comprising: a rotation driving unit stopping the rotation of the microfluidic device when a detection area of the disk-type mierofluidic device reaches a predetermined position; an optical sensor disposed to face the detection area and generating an electrical signal according to the intensity of incident light; a first light source turned on and off at a corresponding frequency to emit light to the detection area held at the predetermined position, and disposed so that the center of the optical path of light emitted from the first light source can pass the detection area and reach the optical sensor; a first filter replacement unit including a plurality of filters, which transmit light of different wavelengths, and selecting and locating one of the plurality of filters on an optical path between the optical sensor and the detection area; a second light source turned on and off at a corresponding frequency to emit light to the detection area held at the predetermined position, and disposed so that the center of the optical path of light emitted from the second light source can pass the detection area and reach an area other than the optical sensor; a second filter replacement unit including a plurality of filters, which transmit light of different wavelengths , and selecting and locating one of the plurality of filters on an optical path between the second light source and the detection area; and a signal processing unit receiving the electrical signal generated by the optical sensor and outputting only a signal having the same frequency as the on/off frequency of the light source.

The first and second filter replacement units may respectively include first and second filter wheels on each of which the plurality of filters are arranged at the same distance from a rotational axis, wherein the angular position of each of the first and second filter wheels is controlled about the rotational axis.

The first light source may face a surface of the disk-type microfluidic device and the optical sensor may face the other surface of the disk-type microfluidic device such that the first light source and the optical sensor are disposed opposite to each other with respect to the disk-type microfluidic device.

The signal processing unit may include a circuit inputting a signal obtained by multiplying the electrical signal received from the optical sensor by a sinusoidal wave having the same frequency as the on/off frequency of each of the first and second light sources to a low-pass filter, and outputting only a DC component. The on/off frequency of each of the first and second light sources may be higher than a frequency of ambient stray light. A difference between the on/off frequency of each of the first and second light sources and the frequency of the ambient stray light may be higher than a cut-off frequency of the low-pass filter.

According to another aspect of the present invention, there is provided an optical detection method using a phase sensitive detection method for a disk-type microfluidic device, the method comprising: stopping the rotation of the disk-type microfluidic device when a detection area of the disk-type microfluidic device reaches a predetermined position; emitting light to the detection area using a light source that is turned on and off at a corresponding frequency; converting light incident from the detection area into an electrical signal using an optical sensor that is disposed to face the detection area and generates an electrical signal according to the intensity of incident light; and selectively outputting only a signal having the same frequency as the on/off frequency of the light source from the electrical signal generated by the optical sensor and detecting the optical properties of a material in the detection area.

When the light incident from the detection area is converted into the electrical signal using the optical sensor, the light incident from the detection area may pass through a filter, which transmits only light of a specific wavelength, before reaching the optical sensor. A plurality of filters transmitting light of different wavelengths may be prepared in advance, and one selected from the plurality of filters according to the wavelength of light to be detected may be located on an optical path between the detection area and the optical sensor before the optical sensor is used.

In order to output only a signal having the same frequency as the on/off frequency of the light source among the light generated by the optical sensor, a signal obtained by multiplying the electrical signal generated by the optical sensor by a sinusoidal wave having the same frequency as the on/off frequency of the light source may be input to a low-pass filter and only a DC component may be output. The on/off frequency of the light source may be higher than a frequency of ambient stray light. A difference between the on/off frequency of the light source and the frequency of the ambient stray light may be higher than a cut-off frequency of the low-pass filter.

## BRIEF DESCRIPTION OF THE DRAWINGS

The above and other aspects of the present invention will become more apparent by describing in detail exemplary embodiments thereof with reference to the attached drawings, in which:

FIG. 1 is a perspective view of an optical detection apparatus according to an exemplary embodiment of the present invention;

FIG. 2 is a diagram for explaining the absorption detection principle of the optical detection apparatus of FIG. 1, according to an exemplary embodiment of the present invention;

FIG. 3 is a diagram for explaining the fluorescence detection principle of the optical detection apparatus of FIG. 1, according to an exemplary embodiment of the present invention; and

FIG. 4 is a block diagram illustrating a signal processing unit of the optical detection apparatus of FIG. 1, according to an exemplary embodiment of the present invention.

## DETAILED DESCRIPTION OF EXEMPLARY EMBODIMENTS

The present invention will now be described more fully with reference to the accompanying drawings, in which exemplary embodiments of the invention are shown.

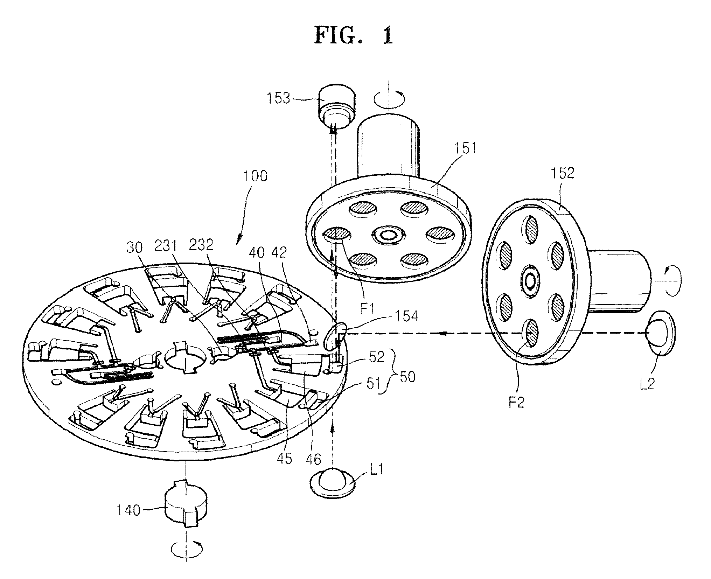

FIG. 1 is a perspective view of an optical detection apparatus using a phase sensitive detection method for a disk-type microfluidic device 100 according to an exemplary embodiment of the present invention. Referring to FIG. 1, the optical detection apparatus includes first and second light sources L1 and L2 each turned on and off at a corresponding frequency to emit light to a detection area 50 of the disk-type microfluidic device 100, and an optical sensor 153 disposed to face the detection area 50. The optical detection apparatus also includes a first filter wheel 151 on which a plurality of filters F1 transmitting light of different wavelengths are arranged at the same distance from a rotational axis, and a second filter wheel 152 on which a plurality of filters F2 transmitting light of different wavelengths are arranged at the same distance form the rotational axis.

The disk-type microfluidic device 100 separates blood plasma from blood and reacts a predetermined amount of blood plasma with a predetermined reagent to obtain a reaction product whose optical properties, such as absorption or fluorescence, vary depending on the amount of cholesterol included in the reaction product. To this end, the disk-type microfluidic device 100 includes a sample well 30 in which blood is received, a particle collector 42 and a fluid collector 40 in which blood corpuscle and blood plasma separated from the blood by centrifugation are respectively collected, two output valves 231 and 232 respectively distributing predetermined amounts of the blood plasma collected in the fluid collector 40 to two reaction chambers 45 and 46, and detection chambers 51 and 52 in which reaction products between reagents previously stored in the detection chambers 51 and 52 and the predetermined amounts of the blood plasma are respectively received. Although the disk-type microfluidic device 100 is configured as described above, the present exemplary embodiment is not limited thereto. Any disk-type microfluidic device can be used if it includes at least one detection area 50, which corresponds to the detection chambers 51 and 52 in the case of the disk-type microfluidic device 100, such that an optically detectable material is received in the detection area 50.

The structures including the chambers 45, 46, 51, and 52 of the disk-type microfluidic device 100 are formed in a disk-type platform. The disk-type platform may be formed of a moldable, transparent, and biologically inert plastic such as polymethyl methacrylate (PMMA), polydimethylsiloxane (PDMS), or polycarbonate (PC). However, the disk-type platform is not limited thereto and may be formed of any material that is chemically and biologically stable, transparent, and chemically processible. The disk-type platform may comprise a plurality of plates. The chambers and channels may be formed in the disk-type platform by carving opposite surfaces of the plates into structures corresponding to the chambers or channels and bonding the plates. The plates may be bonded by a double-sided adhesive tape, ultrasonic welding, laser welding, or other methods.

The optical detection apparatus also includes a rotation driving unit 140 rotating the disk-type microfluidic device 100, and stopping the rotation of the disk-type microfluidic device 100 when the detection area 50 reaches a predetermined position. The rotation driving unit 140 may include a motor driver (not shown) that can control the angular position of the disk-type microfluidic device 100. For example, the motor driver may be a step motor or a direct current (DC) motor.

The optical sensor 153 is disposed over the disk-type microfluidic device 100 to face the detection area 50. The optical sensor 153, which generates an electrical signal according to the intensity of incident light, may be a depletion layer photo diode, an avalanche photo diode (APD), or a photo multiplier tube (PMT). While the optical sensor 153 is disposed over the disk-type microfluidic device 100 in FIG. 1, since both surfaces of the detection area 50 are transparent, the optical sensor 153 may be disposed under the disk-type microfluidic device 100.

A filter F1, which is a bandpass filter transmitting only light of a predetermined wavelength, may be located between the detection area 50 and the optical sensor 153, in detail, disposed on an optical path of light traveling from the detection area 50 to the optical sensor 153. The filter F1 may transmit only light of a predetermined wavelength related with a material to be detected in the detection area 50. For example, when a fluorescent detection probe, such as Alexa Fluor® 488 having a peak emission wavelength of 519 nm, is attached to the material to be detected, the filter F 1 may be an optical bandpass filter transmitting only light in a narrow wavelength band including the emission wavelength of the fluorescent detection probe. Accordingly, the filter F1 may be selected depending on the material to be detected or the detection probe attachable to the material to be detected.

The first filter wheel 151 is disposed between the optical sensor 153 and the detection area 50 in FIG. 1. The first filter wheel 151 includes a plurality of bandpass filters F1 transmitting light of different wavelengths. The plurality of filters F 1 are arranged at the same distance from the rotational axis of the first filter wheel 151. Accordingly, using the motor driver (not shown) that can control the angular position of the first filter wheel 151, any one of the plurality of filters F1 suitable for the material to be detected or the detection probe attached to the material to be detected can be selected and located in front of the optical sensor 153. The first filter wheel 151 may be an example of a first filter replacement unit. The first filter replacement unit is not limited to the first filter wheel 151, and can be any device that includes a plurality of filters and has a mechanism for selecting and locating one of the plurality of filters on the optical path between the detection area 50 and the optical sensor 153. For example, the filter replacement unit may use a mechanism of a slide projector.

The first light source L1, which is turned on and off at a corresponding frequency, may be disposed opposite to the optical sensor 153 with respect to the disk-type microfluidic device 100. In order for the optical sensor 153 to detect the absorption of the material in the detection area 50, the first light source L1 may be disposed such that light emitted therefrom can pass through the detection area 50 and reach the optical sensor 153. The first light source L1 may be disposed differently from FIG. 1, and in this case, the optical path of light emitted from the first light source L1 may be adjusted to be the same as described above using a reflector or a light guide member (not shown).

The second light source L2 emitting light to the detection area 50 is used in order for the optical sensor 153 to detect the fluorescence of the material in the detection area 50. The second light source L2 is turned on and off at a corresponding frequency. Unlike the first light source L1, the second light source L2 may be disposed so that light emitted therefrom and passing through the detection area 50 cannot directly reach the optical sensor 153. In other words, the second light source L2 may be disposed so that the center of the optical path of light emitted from the second light source L2 and passing through the detection area 50 can reach an area other than a light receiving portion of the optical sensor 153. As shown in FIG. 1, the second light source L2 may be disposed in a direction horizontal to the disk-type microfluidic device 100 such that light emitted from the second light source L2 can reach the detection area 50 using a half mirror 154.

An optical bandpass filter F2 may be disposed between the second light source L2 and the detection area 50. The filter F2 can transmit only light in a narrow wavelength band including a wavelength that excites the material to be detected or the fluorescent detection probe attached to the material to be detected. The filter F2 may block at least light corresponding to the emission wavelength of the material to be detected or the fluorescent detection probe attached to the material to be detected. Accordingly, the filter F2 may be selected depending on the material to be detected or the detection probe attached to the material to be detected. The second filter wheel 152 is an example of a second filter replacement unit that selects and locates any one of a plurality of filters F2, which transmit light of different wavelengths, between the second light source L2 and the detection area 50. The shape and driving mechanism of the second filter wheel 152 may be the same as those of the first filter wheel 151.

The first and second light sources L1 and L2 may be various light emitting devices. Examples of the various light emitting devices include a semiconductor light emitting device, such as a light emitting diode (LED) or a laser diode (LD), and a gas discharge lamp, such as a halogen lamp or a xenon lamp. While both the first and second light sources L 1 and L2 are used in FIG. 1, the optical detection apparatus may include only one of the first and second light sources L1 and L2 if the optical detection apparatus is specialized for fluorescence detection or absorption detection.

The optical detection apparatus using the phase sensitive detection method for the disk-type microfluidic device 100 also includes a signal processing unit (not shown) that receives the electrical signal generated by the optical sensor 153 and outputs only a signal having the same frequency as the on/off frequency of each of the first and second light sources L 1 and L2. The signal processing unit includes a circuit inputting a signal obtained by multiplying the electrical signal received from the optical sensor 153 by a sinusoidal wave having the same frequency as the on/off frequency of each of the first and second light sources L 1 and L2 to a low-pass filter and outputting only a direct current (DC) component. The technical feature of the signal processing unit can be more clearly understood according to the following explanation of an optical detection method using a phase sensitive detection method for a disk-type microfluidic device using the optical detection apparatus of FIG. 1.

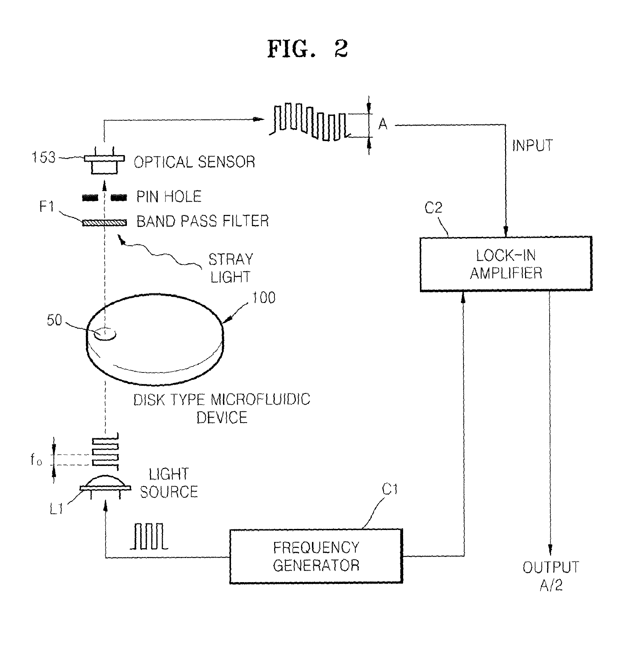

FIG. 2 is a diagram for explaining the absorption detection principle of the optical detection apparatus of FIG. 1. The disk-type microfluidic device 100 is stopped when the detection area 50 reaches a predetermined position. The predetermined position is a position that enables light emitted from the first light source L1 and passing through the disk-type microfluidic device 100 to reach the optical sensor 153. When the rotation of the disk-type microfluidic device 100 is stopped, the first light source L1 is turned on and off at a corresponding frequency. The on/off frequency of the first light source L 1 is dependent on a pulse signal applied from a frequency generator C1 to the first light source L1. The on/off frequency of the first light source L1 is referred to as f0. When light emitted from the first light sour L1 passes through the detection area 50, light of a specific wavelength may be absorbed. For example, when a detection probe, such as a quinoeimine dye, is used for a quantitative analysis of cholesterol, absorption of red light varies depending on the amount of cholesterol in blood plasma.

The light emitted from the first light source L1 and passing through the detection area 50 is incident through the optical bandpass filter F1 and a pin hole onto the light receiving portion of the optical sensor 153. At this time, stray light may be incident together with the light onto the light receiving portion of the optical sensor 153. The filter F 1 may transmit only light of a wavelength band expected to be absorbed by the material to be detected or the detection probe attached to the material to be detected. Since the optical sensor 153 generates an electrical signal according to incident light, the luminescence waveform of the first light source L1 and the waveform of the stray light overlap each other as shown in FIG. 2, resulting in the waveform of the electrical signal.

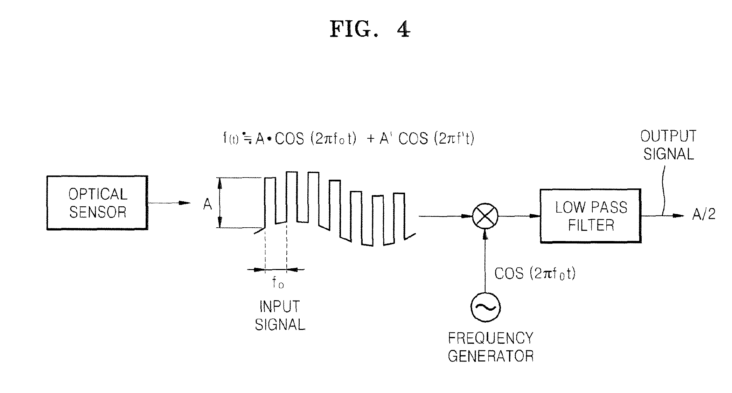

The signal generated by the optical sensor 153 is input to a lock-in amplifier C2. The lock-in amplifier C2, which is an example of the signal processing unit, is typically used for noise reduction of an audio signal and has a circuit whose configuration is well known. A sinusoidal wave having the same frequency as the on/off frequency f0 of the first light source L1 is input from the frequency generator C1 to the lock-in amplifier C2. The lock-in amplifier C2 outputs only an amplitude of the same frequency as the on/off frequency of the first light source L1 among the signals input thereto through a predetermined process, thereby providing information on the absorption of light of the specific wavelength without being affected by the stray light. The signal processing operation of the lock-in amplifier C2 will be explained later with reference to FIG. 4.

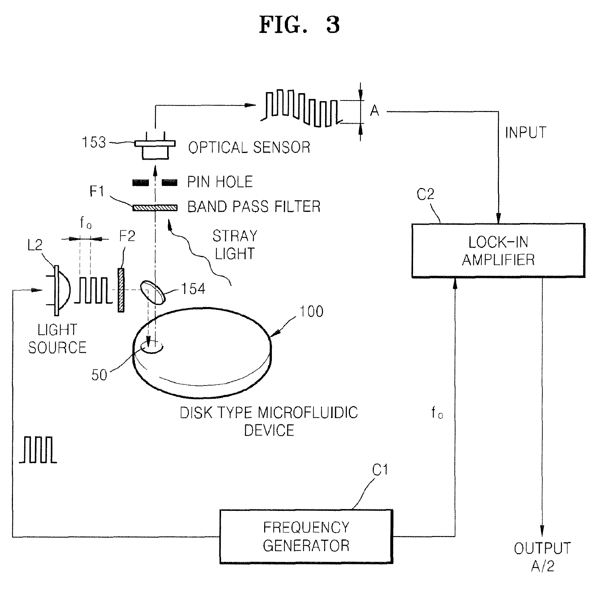

FIG. 3 is a diagram for explaining the fluorescence detection principle of the optical detection apparatus of FIG. 1. When compared with the aforesaid absorption detection principle, the two principles are identical to each other except that a direction in which light is emitted from the second light source L2 to the detection area 50 is different from a direction in which light is emitted from the first light source L1 to the detection area 50. The difference will now be further explained. Light emitted from the second light source L2 and passing through the detection area 50 does not directly reach the optical sensor 153. Also, before the light emitted from the second light source L2 reaches the detection area 50, the light passes through the filter F2, which transmits only light of a specific wavelength band, such that only light of a narrow wavelength band including a wavelength that excites the material to be detected or the detection probe attached to the material to be detected reaches the detection area 50. For example, a fluorescent detection probe, such as Alexa Fluor® 488, is excited by light having a wavelength of 488 nm. In order to detect the detection probe, the filter F2 may selectively transmit light of a wavelength band including the wavelength of 488 nm.

FIG. 4 is a block diagram illustrating a signal processing unit of the optical detection apparatus of FIG. 1, according to an exemplary embodiment of the present invention. The signal input from the optical sensor 153 may have a waveform resulting from the superposition of the waveform of the signal having the on/off frequency $f_0$ of each of the first and second light sources L1 and L2 and the waveform of the stray light having a frequency different from the on/off frequency $f_0$. For example, when this process is performed around a fluorescent lamp, which is turned on and off at a frequency of 120 Hz, the signal having the frequency of $f_0$ and a signal having the frequency of 120 Hz may overlap each other. The signal processing unit, e.g., the lock-in amplifier C2, multiples the input signal by a sinusoidal wave having a frequency $f_0$, inputs a signal obtained by the multiplication to the low-pass filter, and outputs only a DC component.

In mathematical terms, when the frequency of the stray light is f', the signal input to the signal processing unit from the optical sensor 153 is expressed in a Fourier series as

$$f(t) \doteqdot A \cdot \cos(2 \pi f_0 t) + A' \cdot \cos(2 \pi f't).$$

When f(t) is multiplied by cos(2πf0t),

$$\{A \cdot \cos(2 \pi f_0 t) + A' \cdot \cos(2 \pi f't)\} \times \cos(2 \pi f_0 t)$$

$$= A/2 \cdot \{\cos(4 \pi f_0 t) + \cos(0)\} + A'/2 \cdot \{\cos(2 \pi (f_0 + f')t) + \cos(2 \pi (f_0 - f')t)\}.$$

When this result is input to the low-pass filter that passes only a DC component, only A/2·cos(O), that is, A/2, is output. When the frequency $f_0$ is equal to the frequency f', since the stray light may affect the output, the frequency

$f_0$ may be determined to be sufficiently different from the frequency f by considering ambient illumination conditions. In further detail, a difference between the frequencies $f_0$ and f' may be higher than a cut-off frequency of the low-pass filter. The frequency $f_0$ may be higher or lower than the frequency f'. However, if the frequency $f_0$ is too low, the signal processing operation is too time consuming. When the frequency $f_0$ is too high, time efficiency and output accuracy are improved, but there is a limitation in the frequency response of each of the first and second light sources L1 and L2.

The absorption characteristic of the detection area 50 according to the amount of cholesterol in blood was measured when the optical detection apparatus of FIG. 1 is configured as shown in FIG. 2. The on/off frequency $f_0$ of the first light source L1 was 1.3 kHz. The optical sensor 153 was a photodiode 5051UVJ of Perkin Elmer. The optical bandpass filter was a filter of Andover Corp which transmits a wavelength of 512 nm. The pin hole had a diameter of 2.0 mm. The lock-in amplifier was an amplifier of Korean Analog Research System Corporation.

The disk-type microfluidic device 100 was designed to separate blood plasma from blood, react a predetermined amount of the blood plasma with a predetermined reagent, and obtain a reaction product whose optical properties, such as absorption or fluorescence, vary depending on the amount of cholesterol in the reaction product. The reagent contained 4-Aminoantipyrine (0.3 mM), cholesterol esterase (>150 units/liter (U/L)), cholesterol oxidase (>150 U/L), peroxidase (15 mM), a phosphate buffer, a non-reactive stabilizer, and a preservative at pH 6.8.

C. Esterase

Cholesterol Esters ---------------- > Cholesterol + Fatty Acids

C. Oxidase

$Cholesterol + O_2$ ----------------- > $Cholesterol\text{-}3\text{-}one + H_2O_2$

Reroxidase

$2H_2O_2 + 4\text{-}AAP + Phenol$ -------------> $Quinoneimine + 4H_2O$ (1).

Table 1 shows results obtained by measuring 10 times the absorption of the reaction product of the same sample for light having a wavelength 512 nm. The mesurement was performed under four conditions by differing two factors, that is, exposure to external light (open/dark) and the use of a phase sensitive detection method.

**Table 1**

| Measurement No. | PSD & Open | Normal & Open | PSD & Dark | Normal & Dark |
|---|---|---|---|---|
| 1 | 0.113 | 0.126 | 0.116 | 0.125 |
| 2 | 0.114 | 0.135 | 0.117 | 0.124 |
| 3 | 0.112 | 0.158 | 0.118 | 0.126 |
| 4 | 0.115 | 0.121 | 0.119 | 0.125 |
| 5 | 0.114 | 0.160 | 0.118 | 0.125 |
| 6 | 0.112 | 0.140 | 0.119 | 0.122 |
| 7 | 0.116 | 0.134 | 0.117 | 0.124 |
| 8 | 0.117 | 0.124 | 0.119 | 0.124 |
| 9 | 0.114 | 0.119 | 0.118 | 0.123 |
| 10 | 0.117 | 0.121 | 0.117 | 0.122 |

(continued)

| Measurement No. | PSD & Open | Normal & Open | PSD & Dark | Normal & Dark |
|---|---|---|---|---|
| Average | 0.114 | 0.134 | 0.118 | 0.124 |
| Standard deviation | 0,00184 | 0.01497 | 0.00103 | 0.00133 |
| CV(S.D./A) | 1.614 | 11.171 | 0.877 | 1.073 |

In table 1, PSD means that the lock-in amplifier and the phase sensitive detection method were used. The "Normal" means that the phase sensitive detection method was not used. The "Open" means that there was exposure to external light. The "Dark" means that there was no exposure to external light and thus darkroom conditions were satisfied.

When there was no exposure to external light, a difference in standard deviation and coefficient of variation (CV) between when the phase sensitive detection method was used and when the phase sensitive detection method was not used is relatively small. However, when there was exposure to external light, standard deviation and CV when the phase sensitive detection method was used are much smaller than those when the phase sensitive detection method was not used. Accordingly, the optical detection apparatus for the disk-type microfluidic device according to the present invention can accurately measure the absorption characteristic using phase sensitive detection without necessarily satisfying the darkroom conditions.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An optical detection apparatus using a phase sensitive detection method for a disk-type microfluidic device, the optical detection apparatus comprising:

   a rotation driving unit that stops rotation of the microfluidic device when a detection area of the disk-type microfluidic device reaches a predetermined position;
   at least one light source that is turned on and off at a corresponding frequency to emit light to the detection area held at the predetermined position;
   an optical sensor that is disposed to face the detection area and generates an electrical signal according to intensity of incident light; and
   a signal processing unit that receives the electrical signal generated by the optical sensor and outputs only a signal having a same frequency as an on/off frequency of the at least one light source.

2. The optical detection apparatus of claim 1, further comprising a filter replacement unit that comprises a plurality of filters, which transmit light of different wavelengths, and selects and locates one of the plurality of filters disposed on an optical path between the optical sensor and the detection area.

3. The optical detection apparatus of claim 2, wherein the filter replacement unit comprises a filter wheel on which the plurality of filters are arranged at a same distance from a rotational axis, wherein an angular position of the filter wheel is controlled about the rotational axis.

4. The optical detection apparatus of claim 1, wherein the at least one light source comprises a first light source disposed such that a center of an optical path of light emitted from the first light source can pass the detection area and reach the optical sensor.

5. The optical detection apparatus of claim 4, wherein the first light source faces a surface of the disk-type microfluidic device and the optical sensor faces the other surface of the disk microfluidic device such that the first light source and the optical sensor are disposed opposite to each other with respect to the disk-type microfluidic device.

6. The optical detection apparatus of claim 4, further comprising a filter that is disposed on an optical path between the first light source and the detection area, and transmits only light of a specific wavelength.

7. The optical detection apparatus of claim 1, wherein the at least one light source comprises a second light source disposed such that a center of an optical path of light emitted from the second light source can pass the detection area and reach an area other than the optical sensor.

8. The optical detection apparatus of claim 7, further comprising a filter that is disposed on an optical path between the second light source and the detection area, and transmits only light of a specific wavelength.

9. The optical detection apparatus of claim 7, further comprising a filter replacement unit that comprises a plurality of filters, which transmit light of different wavelengths, and selects and locates one of the plurality of filters disposed on an optical path between the second light source and the detection area.

10. The optical detection apparatus of claim 9, wherein the filter replacement unit comprises a filter wheel on which the plurality of filters are arranged at a same distance from a rotational axis, wherein an angular position of the filter wheel is controlled about the rotational axis.

11. The optical detection apparatus of claim 1, wherein the signal processing unit comprises a circuit that inputs a signal obtained by multiplying the electrical signal received from the optical sensor by a sinusoidal wave having a same frequency as the on/off frequency of the at least one light source to a low-pass filter, and outputs only a direct current (DC) component.

12. The optical detection apparatus of claim 11, wherein the on/off frequency of the at least one light source is higher than a frequency of ambient stray light.

13. The optical detection apparatus of claim 12, wherein a difference between the on/off frequency of the at least one light source and the frequency of the ambient stray light is higher than a cut-off frequency of the low-pass filter.

14. An optical detection apparatus using a phase sensitive detection method for a disk-type microfluidic device, the optical detection apparatus comprising:

   a rotation driving unit that stops rotation of the microfluidic device when a detection area of the disk-type microfluidic device reaches a predetermined position;
   an optical sensor that is disposed to face the detection area and generates an electrical signal according to intensity of incident light;
   a first light source that is turned on and off at a corresponding frequency to emit light to the detection area held at the predetermined position, and disposed such that a center of a first optical path of light emitted from the first light source can pass the detection area and reach the optical sensor;
   a first filter replacement unit that comprises a plurality of filters, which transmit light of different wavelengths, and selects and locates one of the plurality of filters disposed on the first optical path between the optical sensor and the detection area;
   a second light source that is turned on and off at a corresponding frequency to emit light to the detection area held at the predetermined position, and disposed such that a center of a second optical path of light emitted from the second light source can pass the detection area and reach an area other than the optical sensor;
   a second filter replacement unit that comprises a plurality of filters, which transmit light of different wavelengths, and selects and locates one of the plurality of filters disposed on the second optical path between the second light source and the detection area; and
   a signal processing unit that receives the electrical signal generated by the optical sensor and outputs only a signal having a same frequency as an on/off frequency of at least one of the first and second light sources.

15. The optical detection apparatus of claim 14, wherein the first and second filter replacement units respectively include first and second filter wheels on each of which the plurality of filters are arranged at a same distance from a rotational axis, wherein an angular position of each of the first and second filter wheels is controlled about the rotational axis.

16. The optical detection apparatus of claim 14, wherein the first light source faces a surface of the disk-type microfluidic device and the optical sensor faces the other surface of the disk-type microfluidic device such that the first light source and the optical sensor are disposed opposite to each other with respect to the disk-type microfluidic device.

17. The optical detection apparatus of claim 14, wherein the signal processing unit comprises a circuit that inputs a signal obtained by multiplying the electrical signal received from the optical sensor by a sinusoidal wave having a same frequency as the on/off frequency of the at least one of the first and second light sources to a low-pass filter, and outputs only a DC component.

18. The optical detection apparatus of claim 17, wherein the on/off frequency of the each of the first and second light sources is higher than a frequency of ambient stray light.

19. The optical detection apparatus of claim 18, wherein a difference between the on/off frequency of the at least one of the first and second light sources and the frequency of the ambient stray light is higher than a cut-off frequency of the low-pass filter.

20. An optical detection method using a phase sensitive detection method for a disk-type microfluidic device, the method comprising:

   stopping rotation of the disk-type microfluidic device when a detection area of the disk-type microfluidic device reaches a predetermined position;
   emitting light to the detection area using a light source that is turned on and off at a predetermined frequency;
   converting light incident from the detection area into an electrical signal using an optical sensor that is disposed to face the detection area and generates the electrical signal according to intensity of the incident light; and
   selectively outputting only a signal having a same frequency as an on/off frequency of the light source from the electrical signal generated by the optical sensor, and detecting an optical property of a material in the detection area.

21. The optical detection method of claim 20, wherein, when the light incident from the detection area is converted into the electrical signal using the optical sensor, the light incident from the detection area passes through a filter, which transmits only light of a specific wavelength, before reaching the optical sensor.

22. The optical detection method of claim 20, wherein a plurality of filters transmitting light of different wavelengths are prepared in advance, and one selected from the plurality of filters according to a wavelength of light to be detected is located on an optical path between the detection area and the optical sensor before the optical sensor is used.

23. The optical detection method of claim 20, wherein, in order to output only the signal having the same frequency as the on/off frequency of the light source from the light generated by the optical sensor, a signal obtained by multiplying the electrical signal generated by the optical sensor by a sinusoidal wave having a same frequency as the on/off frequency of the light source is input to a low-pass filter and only a direct current (DC) component is output.

24. The optical detection method of claim 23, wherein the on/off frequency of the light source is higher than a frequency of ambient stray light.

25. The optical detection method of claim 24, wherein a difference between the on/off frequency of the light source and the frequency of the ambient stray light is higher than a cut-off frequency of the low-pass filter.

FIG. 1

# FIG. 2

# FIG. 3

# FIG. 4

$f(t) \fallingdotseq A \cdot \cos(2\pi f_0 t) + A' \cos(2\pi f' t)$

OPTICAL SENSOR

A

INPUT SIGNAL

$f_0$

$\cos(2\pi f_0 t)$

FREQUENCY GENERATOR

LOW PASS FILTER

OUTPUT SIGNAL

A/2

EP 1 988 381 A1

**European Patent Office**

## EUROPEAN SEARCH REPORT

Application Number

EP 07 12 4081

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JONG-MYEON PARK ET AL: "Multifunctional microvalves control by optical illumination on nanoheaters and its application in centrifugal microfluidic devices" LAB ON A CHIP, ROYAL SOCIETY OF CHEMISTRY, CAMBRIDGE, GB, vol. 7, 15 February 2007 (2007-02-15), pages 557-564, XP007902269 ISSN: 1473-0197 * sections "2.4 Instrumentation" and "3.3 Multiple LIFM operation on a rotating disc"; figure 1 * | 1,20 | INV. G01N21/31 G01N33/487 G01N35/00 |
| Y | US 2002/137218 A1 (MIAN ALEC [US] ET AL) 26 September 2002 (2002-09-26) * paragraphs [0178] - [0191], [0262]; figures 1C,12A,12B * | 1-25 | |
| Y | US 6 591 121 B1 (MADARASZ FRANK L [US] ET AL) 8 July 2003 (2003-07-08) * column 4, line 14 - column 6, line 14; figure 1 * | 1-25 | TECHNICAL FIELDS SEARCHED (IPC) G01N |
| Y | US 2002/122364 A1 (WORTHINGTON MARK OSCAR [US] ET AL WORTHINGTON MARK OSCAR [US] ET AL) 5 September 2002 (2002-09-05) * paragraphs [0037] - [0041], [0090]; figures 1,14 * | 1-25 | |

-/--

The present search report has been drawn up for all claims

| Place of search | Date of completion of the search | Examiner |
|---|---|---|
| Munich | 7 August 2008 | Spott, Thorsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 07 12 4081

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WANG S-L, FAN X-F, XU Z-R, FANG Z-L: "A simple microfluidic system for efficient capillary electrophoretic separation and sensitive fluorimetric detection of DNA fragments using light-emitting diode and liquid-core waveguide techniques" ELECTROPHORESIS, vol. 26, 1 October 2005 (2005-10-01), pages 3602-3608, XP007905373 * abstract and introduction * | 1,11-13, 20,23-25 | |
| Y | ZHANG ET AL: "Enhancement of signal-to-noise level by synchronized dual wavelength modulation for light emitting diode fluorimetry in a liquid-core-waveguide microfluidic capillary electrophoresis system" TALANTA, ELSEVIER, AMSTERDAM, NL, vol. 68, no. 1, 15 November 2005 (2005-11-15), pages 19-24, XP005095359 ISSN: 0039-9140 * abstract and section "2.1 Instrumentations" * | 1,11-13, 20,23-25 | |
| A | MEADE M L ET AL: "Advances in lock-in amplifiers" JOURNAL OF PHYSICS E. SCIENTIFIC INSTRUMENTS, IOP PUBLISHING, BRISTOL, GB, vol. 15, no. 4, 1 April 1982 (1982-04-01), pages 395-403, XP020016805 ISSN: 0022-3735 * the whole document * | 11-13, 17-19, 23-25 | |

TECHNICAL FIELDS
SEARCHED (IPC)

The present search report has been drawn up for all claims

| Place of search | Date of completion of the search | Examiner |
|---|---|---|
| Munich | 7 August 2008 | Spott, Thorsten |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 12 4081

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2008

| Patent document cited in search report | | Publication date | Patent family member(s) | | Publication date |
|---|---|---|---|---|---|
| US 2002137218 | A1 | 26-09-2002 | NONE | | |
| US 6591121 | B1 | 08-07-2003 | US | 6636752 B1 | 21-10-2003 |
| US 2002122364 | A1 | 05-09-2002 | US | 2007070848 A1 | 29-03-2007 |

EPO FORM P0459

For more details about this annex : see Official Journal of the European Patent Office, No. 12/82

**EP 1 988 381 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7061594 B